# EUROPÄISCHE PATENTSCHRIFT

(11) **EP 0 570 810 B1**
(45) Veröffentlichungstag und Bekanntmachung des Hinweises auf die Patenterteilung: **22.05.1996**
(21) Anmeldenummer: 93107602.0
(22) Anmeldetag: 11.05.1993
(51) Int. Cl.: C09D 13/00, C09D 11/00

(54) **Markierungsstift**
Marker pen
Crayon de marquage

(30) Priorität: 19.05.1992 DE 4216497
(43) Veröffentlichungstag der Anmeldung: 24.11.1993
(73) Patentinhaber: Schwan-STABILO Schwanhäusser GmbH & Co., D-90409 Nürnberg (DE)
(72) Erfinder: Horvat, Ivan, W-8832 Weissenburg (DE); Schweizer, Manfred, Dr., W-8501 Eckenhaid (DE); Stöcklein, Thomas, W-8500 Nürnberg 50 (DE)
(74) Vertreter: LOUIS, PÖHLAU, LOHRENTZ & SEGETH

(56) Entgegenhaltungen:
- EP-A- 0 464 304
- DE-A- 2 308 695
- PATENT ABSTRACTS OF JAPAN vol. 013, no. 532 (C-659)28. November 1989 & JP-A-01 217 090 (FUEKI NORI KOGYO KK) 30. August 1989
- PATENT ABSTRACTS OF JAPAN vol. 013, no. 532 (C-659)28. November 1989 & JP-A-01 217 090

## Beschreibung

Die Erfindung betrifft einen Markierungsstift mit einer in einer Umhüllung eingeschlossenen, abschreibbaren Stiftmasse, in welche ein Farbträger eingearbeitet ist.

Markierungsstifte für die Erzeugung farbiger Abstriche sind in vielfältiger Ausführung bekannt. Hinsichtlich Ausbildung bzw. Gestaltung ihres aus einer festen Masse bestehenden Schreiborgans lassen sich Minenstifte und Kreiden unterscheiden. Während bei Farbminenstiften die dünnere Mine durch eine Ummantelung abgestützt wird, ist bei Farbkreiden eine solche Ummantelung wegen ihrer im Vergleich zu Farbminenstiften wesentlich grösseren Dicke (etwa 7 bis 10 mm) nicht erforderlich.

Die Minen- und Kreidemassen enthalten neben dem Farbträger ein Bindemittel und einen Gleit- bzw. Haftstoff, wobei noch verschiedene Füllstoffe zugesetzt sein können. Durch die Bindemittel, z.B. Zellulosederivate und Kunststoffe, wird den Minen und Kreiden eine hinreichende, d.h. dem bei Benutzung auf sie ausgeübten Druck standhaltende Festigkeit verliehen. Die Gleit- und Haftstoffe sorgen dafür, dass sich der Stift auf der Papierunterlage weich (gleitend) abschreiben lässt, unter Erzeugung einer auf der Unterlage fest haftenden Markierspur. Zu diesem Zweck können die Minen mit einem Fettstoff imprägniert sein. Bei sog. Fettstiften bzw. -minen und auch bei Kreiden sind die Fettstoffe wie Paraffin, tierische und pflanzliche Fette, Japanwachs, Stearine oder Kunstwachse in die Minenmasse eingearbeitet. Neben den Fettstoffen können auch noch wasserlösliche und/oder wasserunlösliche Metallseifen in den Stiften bzw. Minen vorhanden sein, um die Gleitfähigkeit zu verbessern. Soweit die Metallseifen wasserlöslich sind wirken sie auch als Emulgator für die Fettstoffe; sie stellen jedoch keinen sturkturbildenden Bestandteil für den Stift bzw. die Mine dar. Die Emulgatorwirkung der Metallseifen beschränkt sich in den bekannen Fällen allerdings auf den Herstellungsprozess, nachdem das in der Stift- bzw. Minenmasse wegen deren Verformbarkeit vorübergehend vorhandene Wasser nach der Formgebung durch Trocknen bei erhöhter Temperatur entfernt wird.

Durch entsprechende Auswahl des Bindemittels und der Fettstoffe lassen sich die physikalischen Eigenschaften, insbesondere die Stift- bzw. Minenhärte modifizieren. Die Farbabgabe hängt weitgehend von der chemischen Zusammenetzung der Stiftmasse ab, wobei es darauf ankommt, dass die auf dem Papier hinterlassene Markierungsspur intensiv gefärbt ist.

Die Herstellung der Farbminen und Farbkreiden erfolgt grundsätzlich in der Weie, dass der trockenen Stiftmasse durch Zusatz von Lösungsmitteln (Wasser oder Gemische von Wasser mit wasserlöslichen organischen Lösungsmitteln) eine für eine Verformung durch Strang- oder Schneckenpressen erforderliche Konsistenz verliehen und der extrudierte Strang anschliessend auf die gewünschte Länge geschnitten und anschliessend getrocknet wird.

Minenmassen mit einem höheren Gehalt an Fetten und Wachsen können ohne Zusatz von Lösungsmitteln durch bekannte Extrusionsverfahren zu Strängen geformt und auf die gewünschte Länge geschnitten werden. Gegebenenfalls wird die Extrusion bei erhöhter Temperatur durchgeführt.

Wenngleich sich die Abschreibeeigenschaften der vorstehend beschriebenen Markierungsstifte durch Variation der Anteile und der chemischen Zusammensetzung der erwähnten Basisbestandteile und auch durch Zusatz von Nebenbestandteilen in gewissem Umfang modifizieren lassen, so wird für manche Zwecke das Abstreichen selbst solcher Stifte, die auf einen geringen Härtegrad eingestellt sind, immer noch als nicht weich genug empfunden. Dies würde z.B. auch für den Fall gelten, dass in einem Markierungsstift der vorstehend beschriebenen Art ein fluoreszierender Farbträger, wie beispielsweise eine Tagesleuchtfarbe, eingearbeitet wäre, mit der durch Abstreifen des Stiftes ein auf der Unterlage befindlicher Schreibtext besonders hervorgehoben werden soll. Auch würde die Farb- bzw. Leuchtwirkung darunter leiden, dass beim Abschreiben eines solchen Stiftes zu wenig Stiftmasse und damit auch eine ungenügende Menge an Farbträger auf das Papier aufgebracht wird.

Für den letztgenannten Zweck wurden deshalb bisher Markierungsstifte mit einem eine Farbstofflösung (Tinte) und ein kapillares Speicherorgan für die Lösung aufnehmenden Gehäuse und einem die Farbstofflösung aus dem Gehäuseinneren nach aussen befördernden und auf die Papierunterlage auftragenden Kapillarorgan verwendet. Dabei wird die "flüssige" Abgabe des Farbstoffs im Vergleich zu den oben beschriebenen Farbminenstiften und Farbkreiden vor allem dann als angenehmer empfunden, wenn die Markierungsspur besonders breit ausgeführt werden soll und die kapillare Schreibspitze aus einem weichen Material gefertigt ist.

Um den Spitzen jedoch eine ausreichende Standfestigkeit während der gesamten Nutzungsdauer zu verleihen, insbesondere dann, wenn sie sich in einem nachfüllbaren Markierungsstift befinden, ist es erforderlich, sie aus einem geeigneten, vorzugsweise gesinterten Kunststoffmaterial herzustellen. Das führt jedoch dazu, dass solche Schreibspitzen zwar elastisch sind, jedoch eine gewisse Grundhärte aufweisen, welche eine bleibende Verformung der Spitze ausschliesst.

Wird mit einem derartigen Markierungsgerät eine grössere, breitere Fläche angelegt - dies wird häufig im künstlerischen und graphischen Bereich erforderlich - so kommt es bei der Verwendung derartiger Markierungsgeräte häufig zu einem unerwünschten, streifigen Farbauftrag. Ein einheitlicher, flächiger Markierungsstrich wird dann nicht erreicht.

Bei Verwendung eines in der Flüssigkeit dispergierten Farbpigments können sich Probleme durch Verstopfung der Kapillaren des Auftragsorgans ergeben. Schliesslich bedingen die bei Flüssigmarkern verarbeiteten Kunststoffteile (Gehäuse, Speicherorgan, Auftragsorgan) - meist handelt es sich um unterschiedliche Arten von Kunststoff - neben einem verhältnismässig hohen Materialaufwand und damit verbundenen relativ hohen Kosten auch erhebliche Probleme bei der Entsorgung, insbesondere Probleme beim Recycling der unterschiedlichen Kunststoffarten. Konventionelle Flüssigmarker können bisher nur über eine Müllverbrennungsanlage einem "Energie-Recycling" zugeführt werden.

In Abkehr von dem Gestaltungs- und Arbeitsprinzip der bekannten Flüssigmarker liegt der Erfindung die Aufgabe zugrunde, einen Markierungsstift zu Verfügung zu stellen, bei dem der Farbträger (Farbstoff, Pigment) in der Stiftmasse durch Einarbeitung in dieser gleichmässig verteilt oder homogen gelöst ist und der im Vergleich zu den bekannten Farbminen und Farbkreiden ein sehr viel weicheres und auch dickeres Aufbringen der Markierungsspur auf der Papierunterlage ermöglicht und der schliesslich auch zur Anwendung auf glatten Oberflächen, wie z.B. stark geleimtem oder Hochglanzpapier oder Folie für Tageslichtprojektoren sowie auf Metall, Kunststoff und auch auf Haut, geeignet ist. Dabei zielt die Erfindung insbesondere auf Markierungsstifte ab, vermittels derer eine (fluoreszierende) Leuchtfarbe, insbesondere eine Tagesleuchtfarbe, enthaltende Markierungsspur auf eine Schreibunterlage aufgebracht wird, um auf dieser befindliche Schreibtexte durch Überstreichen besonders hervorzuheben.

Die Erfindung löst diese Aufgabe bei einem Markierungsstift mit einer in einer Umhüllung eingeschlossenen, abschreibbaren Stiftmasse, in welche ein Farbträger eingearbeitet ist erfindungsgemäss dadurch, dass die Stiftmasse wasserlösliche Metallseifen und Mono- und/oder Oligo-Saccharride und/oder sich hiervon durch Reduktion ableitende Polyole als strukturbildende Bestandteile enthält, die zusammen mit einem in der Stiftmasse enthaltenen Wasseranteil eine gelartige Struktur bilden. Dabei sind die Bestandteile der Stiftmasse vorzugsweise so aufeinander abgestimmt, dass sich die Stiftmasse thixotrop verhält.

In der Veröffentlichung Patent Abstracts of Japan, Vol. 13, Nr. 532(C-659) ist eine Stiftmasse beschrieben, bei der unter anderen Bestandteilen Farbstoffe verwendet werden, die im Color Index nicht erfaßt sind, wie zum Beispiel Titandioxid. In dieser Druckschrift findet sich kein Hinweis, daß die der vorliegenden Erfindung zugrunde liegende Aufgabe durch den Einsatz von im Colour Index erfaßten Farbstoffen unter Zusatz von Sacchariden gelöst wird.

Die DE-A-23 08 695 beschreibt eine streichfähige Farbmasse in förmiger Konsistenz. Als Gerüstbildner werden Alkaliseifen höherer Fettsäuren verwendet. In dieser Veröffentlichung wird die gleichzeitige Verwendung von Sacchariden und Metallseifen weder offenbart noch nahegelegt.

Die EP-A-0 464 304 beschreibt zwar Markierungsflüssigkeiten, die aus einer alkalischen Lösung von Hydroxypyrentrisulfonsäure und Sacchariden bestehen, aber in dieser Stiftmasse sind keine Metallseifen enthalten. Hier kann kein Hinweis entnommen werden, daß eine streichfähige Stiftmasse durch Kombination von Sacchariden und bestimmten Anteilen an Metallseifen zur Lösung der eingangs gestellten Aufgabe führen.

Die in dem erfindungsgemässen Markierungsstift enthaltene Stiftmasse besitzt einen im Vergleich zu den bekannten Farbminen und Farbkreiden völlig unterschiedlichen Aufbau bzw. Zusammensetzung.

Um bei dem erfindungsgemässen Markierungstift die Haftung des Stiftabstriches noch zu verbessern und die Trocknungszeit des Abstrichs zu verkürzen sieht die Erfindung vor, dass die Stiftmasse als weiteren strukturbildenden Bestandteil Fettstoffe (fettartige Substanzen und/oder Wachse oder wachsartige Substanzen) enthält. Der Zusatz von Fettstoffen bewirkt eine raschere Wischfestigkeit, insbesondere beim Auftragen auf nicht oder wenig saugende Unterlagen. Die Anteile der Bestandteile der Stiftmasse sind dabei so aufeinander abgestimmt, dass sich der Stift auf einer Schreibunterlage weich unter Hinterlassung einer breiten zusammenhängenden Markierungsspur abschreiben lässt.

Aufgrund seiner durch die Kombination Metallseife/Saccharid bzw. Polyol bestimmten Struktur besitzt der erfindungsgemässe Markierungsstift Abschreibeeigenschaften, die als zwischen den vorerwähnten Flüssigmarkern und den bekannten festen Farbminen und Farbkreiden liegend angesehen werden können, wobei der Abstrich sowohl gegenüber den Flüssigmarkern als auch den Farbminen und Farbkreiden deutlich sanfter und gleitender und vor allem gleichmässiger und farbstärker ist.

Wenn im Zusammenhang mit der Erfindung von einer gelartigen Stiftmasse die Rede ist, dann soll hiermit lediglich auf ihre formbeständige und leicht deformierbare Konsistenz, jedoch nicht auf eine für Kolloidsysteme charakteristische Struktur hingewiesen werden.

Besonders gute Ergebnisse bzw. Stifteigenschaften werden erhalten, wenn der Anteil der erfindungsgemässen Stiftmasse an wasserlöslicher Metallseife 5 bis 40 Gew.-%, vorzugsweise 8 bis 20 Gew.-% beträgt. Bei Verwendung einer fetthaltigen Stiftmasse erweist es sich als zweckmässig, die Einsatzmenge an Metallseife auf den Fettstoffanteil abzustimmen. Dabei liegt das Verhältnis von Seife:Fettstoff im allgemeinen zwischen 2:1 und 2:3, vorzugsweise 3:2 bis 1:1. In der erfindungsgemässen Stiftmasse wirkt die wasserlösliche Metallseife nicht nur als Emulgatur für in ihr enthaltene Fettstoffe, sondern stellt auch einen strukturbildenen Bestandteil für den fertigen Stift dar.

Der Anteil der erfindungsgemässen Stiftmasse an Saccharid bzw. Polyol liegt zweckmässig zwischen 5 und 50 Gew.-%, vorzugsweise zwischen 25 und 40 Gew.-%. Der Anteil der Stiftmasse an Saccharid
bzw. Polyol überwiegt im allgemeinen dem Metallseifenanteil; das Verhältnis Saccharid bzw. Polyol:Metallseife liegt zweckmässig zwischen 1:1 und 5:1, vorzugsweise zwischen 2:1 und 3:1. Die Summe der Anteile der Stiftmasse an Metallseife und Saccharid sollte mindestens 40 Gew.-%, vorzugsweise 50 Gew.-% betragen.

Der Wasseranteil der erfindungsgemässen Stiftmasse liegt im allgemeinen zwischen 15 und 65 Gew.-%, vorzugsweise zwischen 30 und 40 Gew.-%. Im Gegensatz zu der Herstellung der eingangs erwähnten, Fettstoffe und Metallseifen enthaltenden Feststoffminen wird bei der Herstellung der erfindungsgemässen Minenmasse das Wasser nach der Formgebung der Stiftmasse nicht aus dem Stift entfernt, was mit dazu beiträgt, dass der erfindungsgemässe Markierungsstift mit den bekannten Minen nicht vergleichbare Abschreibeigenschaften besitzt.

Durch Beimischung eines wasserlöslichen organischen Lösungsmittels zu dem Wasseranteil lassen sich die Eigenschaften der Stiftmasse in verschiedener Hinsicht modifizieren. So verleiht die Zugabe von Glykolverbindungen, wie beispielsweise Ethylen-, Propylen-, Butylen-, Diethylen- und Triethylenglykol, der Stiftmasse eine transparente Abschreibcharakteristik. In diesem Zusammenhang hat sich die Verwendung von 1,2 Propylenglykol als besonders vorteilhaft erwiesen.

Der Anteil der erfindungsgemässen Stiftmasse an (löslichen) Farbstoff oder Pigment beträgt im allgemeinen 0,1 bis 10 Gew.-%, vorzugsweise 0,5 bis 5 Gew.-%. Bevorzugt werden sehr leuchtkräftige Farbstoffe bzw. Pigmente. Hierzu sind auch die in wässrigen Kunststoffdispersionen enthaltenen organischen Farbigmente zu rechnen, bei denen der eigentliche Farbträger an die dispergierten Kunststoffteilchen gebunden ist. Mit der Verwendung solcher Dispersionen kann in die Stiftmasse gleichzeitig der gewünschte Wasseranteil eingebracht werden.

Der erfindungsgemässe Markierungsstift kann als Alternative zu den bekannten Flüssigmarkern verwendet werden, wenn in die Stiftmasse ein fluoreszierender Farbstoff, insbes. eine Tagesleuchtfarbe wie z.B. Hydroxypyrentrisulfonsäure (Pyranin C.I. Solvent Green 7 No. 59.040) oder C.I. Basic Violet 10 No. 45.170 (Rhodamin B), eingearbeitet ist.

Soweit in der erfindungsgemässen Stiftmasse Fettstoffe enthalten sein sollen beträgt deren Anteil im allgemeinen 5 bis 25 Gew.-% vorzugsweise 8 bis 15 Gew.-%. Als Fettstoffe können natürlich Wachse, wie Bienenwachs, Japanwachs, Carnaubawachs, oder damit vergleichbare synthetische Nachstellungen (handelsübliches Bienenwachs- und Japanwachs-substitute) auf der Basis von Paraffinen und natürlichen oder synthetischen Triglyceriden in die Minenmasse eingearbeitet werden. Für diesen Zweck weiterhin geeignete Fettstoffe sind auch feste Triglyceride von C₁₈-C₃₆ Fettsäuren, flüssige Triglyceride von C₆-C₁₀ Fettsäuren (sog. Neutralöle) und Stearine. Auch ein Zusatz von Paraffinöl hat sich als geeignet herausgestellt. Pflanzliche Öle mit Jodzahlen über 60 sind weniger geeignet, wenn eine sehr gute Wischfestigkeit der Texturen angestrebt wird.

Durch die Einarbeitung von Fettstoffen in die Stiftmasse wird neben der Wischfestigkeit auch ein rasches Abtrocknen des Abstrichs gefördert.

Wird der Minenmasse kein Fettstoff zugesetzt, so beobachtet man eine besonders ausgeprägte Thixotropie beim Abstrich auf einer Schreibunterlage, d.h. die Mine verflüssigt sich unter Druckausübung. Diese ausgeprägte Thixotropie führt zu einem sehr angenehmen Schreibgefühl. Dabei ist allerdings eine geringere Wischfestigkeit und ein langsameres Abtrocknen der Markierungsspur in Kauf zu nehmen, insbesondere auf einer glatten Unterlage.

Als an der Bildung der erfindungsgemässen Stiftstruktur beteiligte Metallseifen finden vorzugsweise Alkaliseifen, ganz besonders bevorzugt die Natrium- und Kaliseifen von höheren Fettsäuren, insbesondere der Stearin-, Palmitin- und Ölsäure und deren Gemische Verwendung. Als geeignet haben sich auch die Natrium- und Kaliseifen der Behen- und Erucasäure erwiesen.

Da die genannten Seifen in wässriger Lösung alkalisch reagieren, können zusammen mit ihnen erfindungsgemäss solche Farbstoffe besonders wirkungsvoll eingesetzt werden, welche, wie beispielsweise Pyranin, für die Entwicklung ihrer Leuchtkraft ein alkalisches Medium erfordern.

Die Konsistenz der erfindungsgemässen Stiftmasse lässt sich durch entsprechende qualitative und quantitative Auswahl der Metallseifen regulieren. Bei Verwendung von beispielsweise Natriumstearat als alleinigem Seifenbestandteil wird eine vergleichsweise feste Struktur erhalten, die sich jedoch durch eine Beimischung von Kaliseifen von gesättigten und/oder ungesättigten Fettsäuren, z.B. Kaliumoleat, weicher einstellen lässt. Kaliumstearat, Natrium- und Kaliumoleat alleine sind für den erfindungsgemässen Zweck nicht so sehr geeignet. Kaliumstearat und -oleat ergeben Minen mit ausgeprägt weicher Konsistenz; Natriumoleat ergibt Minen, die fast gummielastisch-biegsam sind.

Die Wirkung des anderen Basisbestandteiles der erfindungsgemässen Stiftmasse, also des Saccharids bzw. des sich hiervon durch Reduktion ableitenden Polyols, zeigt sich in einer deutlichen Strukturbildung, welche möglicherweise durch Nebenvalenzbindungen zwischen der Carboxylgruppe der Fettsäuren und den Hydroxylgruppen des Saccharids bzw. des Polyols hervorgerufen wird. Bei einem deutlichen Überschuss an Saccharid bzw. des sich hiervon durch Reduktion ableitenden Polyols treten die Klebeeigenschaften dieser Verbindungsgruppe hervor. Den Sachariden bzw. Polyolen kommt aber auch eine die Leuchtkraft und die Lichtbeständigkeit steigernde Wirkung zu, wie sie in der vorveröffentlichten deutschen Patentanmeldung P 40 20 901.6 für ihre Verwendung in einem eine Pyraninlösung enthaltenden Flüssigmarker beschrieben ist. Für die Zwecke der Erfindung können grundsätzlich alle Mono- und Oligosaccharide, wie z.B. Di- und Trisaccharide und die sich hiervon durch Reduktion ableitenden Polyole verwendet werden. Vorzugsweise kommen Saccharose, Maltose, Lactose, Glucose, Fructose, Xylit und Sorbit in Betracht. Es versteht sich, dass die verschiedenen Saccharide ebenso wie die verschiedenen Metallseifen als Gemisch eingesetzt werden können.

Es wurde bereits eingangs darauf hingewiesen, dass der erfindungsgemässe Markierungsstift in seiner äusseren Form und seinen Abmessungen mit den bekannten Farbkreiden vergleichbar ist. Er kann beispielsweise Zylinder- oder Quaderform mit einer Länge von mehreren Zentimetern, vorzugsweise 3-5 cm, aufweisen, so dass der Stift eine vergleichsweise breite Abstreiffläche besitzt, durch deren Andruck gegen die Schreibunterlage sich der erfindungsgemäss angestrebte breite Abstrich ohne Streifenbildung innerhalb der Markierungsspur erzielen lässt. Sein Durchmesser bzw. seine Kantenlängen an der Basis liegen im allgemeinen zwischen 5 und 15mm. Da er jedoch ein Lösungsmittel, vorzugsweise Wasser, enthält, wird er zweckmässig mit einer geeigneten Umhüllung versehen, welche eine Verflüchtigung des Lösungsmittels bzw. ein Austrocknen verhindert. Die Umhüllung ist vorteilhafterweise so gestaltet, dass die darin befindliche Minenmasse ausgewechselt bzw. nach Aufbrauchen durch einen neuen Stiftkörper ersetzt werden kann. Zu diesem Zwecke kann der erfindungsgemässe Markierungsstift beispielsweise in dem mit einer Drehmechanik ausgerüsteten Auftragsgerät gem. DE-GM 90 07 332 verwendet werden, das sich wegen seiner kompakten Bauart besonders anbietet.

Ein Entsorgungsproblem in dem Ausmass wie es bei den konventionellen Flüssigmarkern besteht, tritt bei dem erfindungsgemässen Markierungsstift nicht auf.

Ein im Vergleich zu den Flüssigmarkern weiterer Vorteil des erfindungsgemässen Markierungsstifts besteht darin, dass sich mit ihm dickere Abstriche auf der Schreibunterlage aufbringen und deshalb auch intensivere Markierungseffekte erzielen lassen.

Gegenüber Farbkreiden ist weiterhin von Vorteil, dass durch den residenten Wassergehalt der Mine auch (lösliche) Farbstoffe eingesetzt werden können, wobei hier verhältnismässig niedrige Konzentrationen ausreichend sind.

In Farbkreiden werden (lösliche) Farbstoffe überhaupt nicht oder nur vorübergehend angelöste Farbstoffe verwendet. Daher lassen sich bei deren Verwendung nur blasse Farbtöne erzeugen, selbst bei vergleichsweise hohen Farbstoffkonzentrationen.

Vorteilhaft ist weiterhin, dass mit dem erfindungsgemässen Markierungsstift auf wasserlöslichen Tinten, beispielsweise auf Füllfederhalter-, Tintenkugelschreiber- oder sog. Fineliner Schriften, sofort nach dem Abtrocknen ohne Verwischen markiert werden kann.

Als Vorteil ist weiterhin anzumerken, dass Rhodamine und Kombinationen aus Rhodaminen mit anderen (wasserlöslichen) Farbstoffen ohne Zusatz von bei Flüssigmarkierern üblichen Harzen oder Harzdispersionen fluoreszieren.

Falls die Stiftmasse des erfindungsgemässen Markierungsstiftes rezepturbedingt Thixotropie-Erscheinungen zeigt, ist eine Fertigung nach den bekannten Techniken der Stiftproduktion nur mit Einschränkungen möglich, da sich die Masse unter Druck beim Extrudieren verflüssigen würde.

Zweckmässigerweise wird daher die knapp über den Tropfpunkt erhitzte Stiftmasse in geeignete Umhüllungen eingegossen und anschliessend durch Kühlen in bekannter Weise wieder verfestigt. Um Markierungsstifte nachfüllbar gestalten zu können, ist es zweckmässig, Markierungsstift-Minen in bekannter Weise durch Giessen in Metallformen herzustellen, vorzugsweise bei gleichzeitiger Anformung eines Halteteils. Die entsprechenden Techniken sind aus der Herstellung von Lippenstiften, Deo-Stiften und auch Suppositorienmassen hinreichend bekannt; die Verwendung von Klappformen oder auch von Hochleistungs-Giessautomaten soll daher nicht näher beschrieben werden.

Denkbar ist auch die Verwendung von spitzbaren Holz- oder Kunststoffumhüllungen und deren Befüllung in der Art vorzunehmen, wie sie in DE 27 18 957 und DE 27 59 610 für Kosmetikstifte beschrieben ist.

Es folgen Ausführungsbeispiele für die Zusammensetzung erfindungsgemässer Markierungsstifte. Die Mengenabgaben beziehen sich dabei immer auf Gewichtsprozent.

### Beispiel 1 (gelbe Fluoreszenz)

| | |
|---|---|
| 50,000 | Wasser |
| 38,000 | Rohrzucker |
| 10,000 | Natriumstearat |
| 1,500 | C.I. Solvent Green 7 No. 59.040 |
| 0,500 | Kaliumcarbonat |

Diese Markierungsstiftmasse, ohne Zusatz von Fettstoffen, zeichnet sich durch eine intensiv-gelbe Fluoreszenz und eine ausgeprägte Thixotropie aus, welche für einen sehr geschmeidigen Abstrich sorgt. Da die Stiftmasse kurzzeitig in einen dünnflüssigen Zustand übergeht, zieht sie, wie bei Flüssigmarkern, oberflächlich in eine dazu geeignete Schreibunterlage ein, bleibt also nicht nur mehr oder minder gut auf der Oberfläche haften, wie das bei Farbkreiden der Fall ist.

### Beispiel 2 (Rosa)

| | |
|---|---|
| 35,000 | Wasser |
| 35,000 | Rohrzucker |
| 15,000 | Natriumstearat |
| 10,000 | Bienenwachs |
| 0,500 | Kaliumcarbonat |
| 4,500 | Tagesleuchtpigment* |

| | |
|---|---|
| *Eine Mischung von Basic Violet 11, C.I.45.174, Basic Red 1, C.I.45.160 und Solvent Yellow 161 niedergeschlagen auf einem feinpulverisierten inerten Kunststoff-Material ( zu beziehen von der Firma Langer & Co., D-2863 Ritterhude). | |

### Beispiel 3 (Grün)

| | |
|---|---|
| 33,500 | Wasser |
| 50,000 | Rohrzucker |
| 10,000 | Natriumstearat |
| 5,000 | Paraffinöl |
| 1,350 | C.I. Solvent Green 7 No. 59.040 |
| 0,150 | C.I. Reactive Green 21 |

### Beispiel 4 (Blau)

| | |
|---|---|
| 39,500 | Wasser |
| 35,000 | Rohrzucker |
| 12,000 | Bienenwachs |
| 10,000 | Natriumstearat |
| 3,000 | Natriumoleat |
| 0,500 | C.I. Acid Blue 1 No. 42.045 |

Bei dieser Rezeptur wurde ein saurer Lebensmittelfarbstoff verwendet.

### Beispiel 5 (Rosa)

| | |
|---|---|
| 34,800 | Wasser |
| 20,000 | Rohrzucker |
| 25,000 | Bienenwachs-Substitut |
| 20,000 | Natriumstearat |
| 0,170 | C.I. Basic Red 1 No. 45.160 |
| 0,030 | C.I. Solvent Red 49 No. 45.170:1 |

Es handelt sich um eine Formulierung mit hohem Anteil an synthetischem Bienenwachs. Die eingesetzten Rhodamine fluoreszieren ohne zusätzlichen Harzanteil.

### Beispiel 6 (Orange)

| | |
|---|---|
| 40,000 | Wasser |
| 35,000 | Rohrzucker |
| 10,000 | Japanwachs-Substrat |
| 12,000 | Natriumsteart |
| 1,000 | C.I. Solvent Green 7 No. 59.040 |
| 2,000 | Tagesleuchtpigment wie in Beispiel 2 |

### Beispiel 7 (Schwarz, deckend)

| | |
|---|---|
| 36,000 | Wasser |
| 35,000 | Sorbit als Lösung, 70 Gew.-% |
| 10,000 | Neutralöl |
| 14,000 | Natriumstearat |
| 5,000 | C.I. Pigment Black 7 No. 77.266 |

Es handelt sich um eine pigmenthaltige Formulierung für die Anbringung von abwaschbaren Kennzeichnungen auf glatten Flächen.

### Beispiel 8 (Rot)

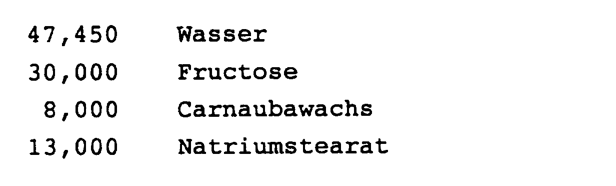

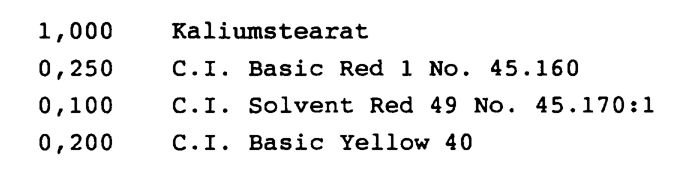

### Beispiel 9 (Orange)

| | |
|---|---|
| 48,920 | Wasser |
| 27,000 | Maltose |
| 10,000 | Paraffinwachs 52°C |
| 13,000 | Natriumstearat |
| 1,000 | C.I. Solvent Green 7 No. 59.040 |
| 0,050 | C.I. Basic Red 1 No. 45.160 |
| 0,03 | C.I. Solvent Red 49 No. 45.170:1 |

### Beispiel 10 (Türkis)

| | |
|---|---|
| 40,500 | Wasser |
| 35,000 | Glucose |
| 10,000 | Bienenwachs |
| 10,000 | Natriumstearat |
| 3,000 | Natriumoleat |
| 1,000 | C.I. Reactive Green 21 |
| 0,500 | C.I. Solvent Green 7 |

### Beispiel 11 (gelb fluoreszierend)

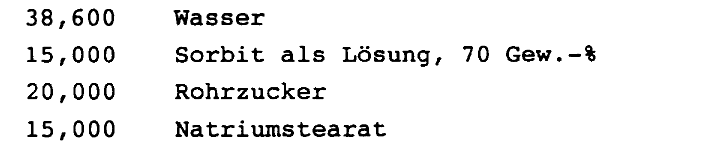

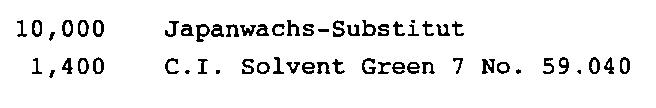

### Beispiel 12 (Lila)

| | |
|---|---|
| 43,700 | Wasser |
| 35,000 | Rohrzucker |
| 5,000 | 1.2-Propylenglykol |
| 15,000 | Natriumstearat |
| 1,000 | C.I. Basic Violet 10 No. 45.170 |

Aufgrund des Zusatzes von Glykolen, speziell von 1.2-Propylenglykol, lässt sich die Transparenz und Bruchfestigkeit des Stiftkörpers verbessern. Eine dem vorstehenden Beispiel entsprechende Rezeptur kann dann in Betracht gezogen werden, wenn kein besonderer Wert auf universelle Anwendbarkeit, z.B. auf sog. Faxpapieren und auf kohlepapierfreiem Durchschlagpapier, gelegt werden muss.

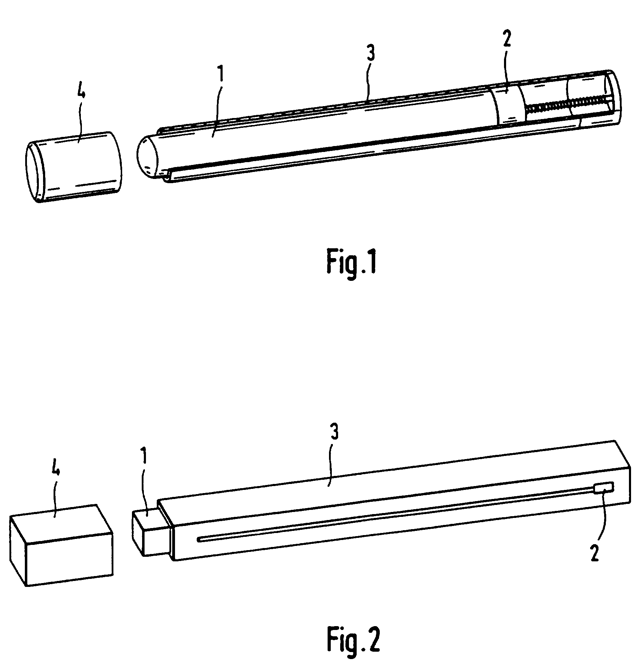

In den Figuren 1 und 2 der Zeichnung ist die Verwendung des erfindungsgemässen Markierungsstifts 1 in einem diesen umschliessenden, mit einer Vorschubmechanik 2 ausgestatteten Gehäuse 3 veranschaulicht. Bei dem Ausführungsbeispiel gem. Figur 1 besitzt der Stift eine kreisförmige, bei dem Ausführungsbeispiels gem. Figur 2 eine rechteckige bzw. quadratische Querschnittsform. Der Querschnittsform entsprechend ist die Kappe 4 ausgebildet, die bei Nichtgebrauch des Stifts auf dessen Auftragsende aufsteckbar ist und somit das Auftragsende gegen Austrocknen schützt. Wie aus der Zeichnung ersichtlich ist das Auftragsende des erfindungsgemässen Markierungsstifts stumpf ausgebildet. Die Grösse der Abstreichfläche liegt zweckmässig zwischen 8 und 25 mm.

## Patentansprüche

1. Markierungsstift mit einer in einer Umhüllung eingeschlossenen, abschreibbaren Stiftmasse, in welcher ein Farbträger eingearbeitet ist,
**dadurch gekennzeichnet,**
daß die Stiftmasse 8 bis 40 Gew.-% wasserlösliche Metallseife und 5 bis 50 Gew.-%, vorzugsweise 25 bis 40 Gew.-% Mono- und/oder Oligosaccharide und/oder sich hiervon durch Reduktion ableitende Polyole als strukturbildende Bestandteile enthält, die zusammen mit einem in der Stiftmasse enthaltenen Wasseranteil eine gelartige Struktur bilden.

2. Markierungsstift nach Anspruch 1,
**dadurch gekennzeichnet,**
daß die Bestandteile der Stiftmasse so aufeinander abgestimmt sind, daß sich die Stiftmasse thixotrop verhält.

3. Markierungsstift nach Anspruch 1,
**dadurch gekennzeichnet,**
daß die Stiftmasse als weitere strukturbildende Bestandteile und zur Verbesserung der Haftung und Verkürzung der Trocknungszeit des Stiftabstrichs auf der Unterlage 5 bis 25 Gew.-%, vorzugsweise 8 bis 15 Gew.-% Fettstoffe enthält.

4. Markierungsstift nach einem oder mehreren der vorhergehenden Ansprüche,
dadurch gekennzeichnet,
daß das in der Stiftmasse enthaltene Lösungsmittel Wasser ist und dessen Anteil in der Stiftmasse 15 bis 65 Gew.-%, vorzugsweise 30 bis 40 Gew.-% beträgt.

5. Markierungsstift nach einem oder mehreren der vorhergehenden Ansprüche,
**dadurch gekennzeichnet,**
daß der überwiegende Anteil an Metallseife aus Natriumstearat besteht und in der Stiftmasse als weitere Metallseifen Kaliseifen von gesättigten und/oder ungesättigten Fettsäuren enthalten sind.

6. Markierungsstift nach einem oder mehreren der vorhergehenden Ansprüche,
**dadurch gekennzeichnet,**
daß als Farbträger Tageslicht-Leuchtfarben verwendet werden.

7. Markierungsstift nach einem oder mehreren der vorhergehenden Ansprüche.
**dadurch gekennzeichnet,**
daß die Umhüllung des Markierungsstiftes als Schutz für die Stiftmasse gegen Austrocknen ausgebildet ist.

8. Markierungsstift nach einem oder mehreren der vorhergehenden Ansprüche,
**dadurch gekennzeichnet,**
daß der Stift auswechselbar in einem Gehäuse untergebracht und sein Auftragsende mit einer Kappe abgedeckt ist.

## Claims

1. Marker pen having a consumable pen material which is enclosed in a covering and in which a colour medium is incorporated, characterized in that the pen material contains 8 to 40% by weight of water-soluble metal soap and 5 to 50% by weight, preferably 25 to 40% by weight, of mono- and/or oligosaccharide and/or polyols deriving therefrom by reduction, as structure-forming components, which, together with an amount of water contained in the pen material, form a gel-like structure.

2. Marker pen according to Claim 1, characterized in that the components of the pen material are tailored to one another in such a way that the pen material exhibits thixotropic behaviour.

3. Marker pen according to Claim 1, characterized in that the pen material contains 5 to 25% by weight, preferably 8 to 15% by weight, of fatty substances as further structure-forming components and for improving the adhesion and shortening the drying time of the pen mark on the substrate.

4. Marker pen according to one or more of the preceding claims, characterized in that the solvent contained in the pen material is water and its amount in the pen material is 15 to 65% by weight, preferably 30 to 40% by weight.

5. Marker pen according to one or more of the preceding claims, characterized in that the predominant proportion of metal soap comprises sodium stearate, and potash soaps of saturated and/or unsaturated fatty acids are contained in the pen material as further metal soaps.

6. Marker pen according to one or more of the preceding claims, characterized in that luminous daylight colours are used as a colour medium.

7. Marker pen according to one or more of the preceding claims, characterized in that the covering of the marker pen is formed to protect the pen material from drying out.

8. Marker pen according to one or more of the preceding claims, characterized in that the pen is housed in a casing in a replaceable manner and its application end is covered with a cap.

## Revendications

1. Crayon de marquage se composant d'une masse d'écriture étalable enfermée dans un boîtier et dans laquelle est incorporé un colorant,
caractérisé en ce que
la masse d'écriture contient 8 à 40 % en poids d'un savon métallique soluble dans l'eau et 5 à 50 % en poids, de préférence 25 à 40 % en poids de mono- et / ou oligo-saccharides et / ou de polyols en dérivant par réduction, constituant les éléments formant la structure qui, avec une certaine proportion d'eau contenue dans la masse d'écriture, forment une structure semblable à un gel.

2. Crayon de marquage selon la revendication 1, caractérisé en ce que les constituants de la masse d'écriture sont adaptés les uns aux autres de façon telle que la masse d'écriture se comporte de façon thixotropique.

3. Crayon de marquage selon la revendication 1, caractérisé en ce que la masse d'écriture contient, comme autres constituants formant la structure et pour l'amélioration de l'adhérence et le raccourcissement de la durée de séchage sur le support, de 5 à 25 % en poids, de préférence de 8 à 15 % en poids de substances grasses.

4. Crayon de marquage selon l'une quelconque ou plusieurs des revendications précédentes, caractérisé en ce que le solvant contenu dans la masse d'écriture est l'eau, et en ce que sa proportion dans la masse d'écriture est de 15 à 65 % en poids, de préférence 30 à 40 % en poids.

5. Crayon de marquage selon l'une quelconque ou plusieurs des revendications précédentes, caractérisé en ce que la portion prépondérante des savons métalliques consiste en stéarate de sodium, les autres savons métalliques contenus dans la masse d'écriture étant des savons de potassium d'acides gras saturés et / ou non saturés.

6. Crayon de marquage selon l'une quelconque ou plusieurs des revendications précédentes, caractérisé en ce que, comme véhicule de couleur, on utilise un colorant lumineux "lumière du jour".

7. Crayon de marquage selon l'une quelconque ou plusieurs des revendications précédentes, caractérisé en ce que le boîtier du crayon de marquage est conçu pour servir de protection de la masse d'écriture contre le séchage.

8. Crayon de marquage selon l'une quelconque ou plusieurs des revendications précédentes, caractérisé en ce que le crayon est monté interchangeable dans un boîtier, et son extrémité utile est recouverte d'un capuchon.
